# EUROPÄISCHE PATENTSCHRIFT

(11) **EP 2 878 916 B1**
(45) Veröffentlichungstag und Bekanntmachung des Hinweises auf die Patenterteilung: **24.08.2016**
(21) Anmeldenummer: 14003510.6
(22) Anmeldetag: 14.10.2014
(51) Int. Cl.: F41H 5/26

(54) **Winkelspiegel**
Periscope
Périscope

(30) Priorität: 29.11.2013 DE 102013113223
(43) Veröffentlichungstag der Anmeldung: 03.06.2015
(73) Patentinhaber: GuS Periscopes GmbH & Co. KG, 32312 Lübbecke (DE)
(72) Erfinder: Kuhnke, Dieter, 32312 Lübbecke (DE)
(74) Vertreter: Rolf, Gudrun, LL.M

(56) Entgegenhaltungen:
- WO-A1-2010/128932
- US-A1- 2003 129 567
- US-B1- 7 719 749
- US-B1- 8 427 434

## Beschreibung

Die Erfindung betrifft einen Winkelspiegel für gepanzerte Fahrzeuge, aus einem Gehäuse mit einem darin eingesetzten ein- oder mehrteiligen Prismenblock, einem Einblick und einem Ausblick sowie mit einem elektronischen Bildschirm zur gleichzeitigen Durchsicht und Einspielung von Text und/ oder Bildinformationen, wobei der Bildschirm aus einem dünnen flachen oder folienartigen Bauelement besteht.

Eine bekannte Winkelspiegelanordnung, DE 36 27 716 A1, weist an einer dem Einblick abgewandten Fläche des Prismenblockes eine Anzeigeneinheit mit einem Anzeigefeld für einspiegelbare Informationen auf, wobei diese und andere bekannte Anzeigeeinrichtungen nachteiligerweise oftmals sehr groß sind und zusätzlichen Bauraum beanspruchen, insbesondere für die in den Anzeigeeinheiten integrierte Elektronik, sodass die Gehäuseabmessungen entsprechend vergrößert werden müssen.

Bekannt ist des Weiteren ein Periskop mit einem elektrisch schaltbaren Spiegel und einem hinter dem Prismenblock und dem Spiegel angeordneten Flachbildschirm, US 7 719 749 B1, um wahlfrei Außenansichten, Displayanzeigen oder Überlagerungsansichten anzeigen zu können, was jedoch auf Grund des Erfordernisses des elektronisch schaltbaren Spiegels sowie eines zusätzlichen optischen Prismas aufwendig herzustellen ist und in der Funktion unscharfe oder randseitig verzerrte Ansichten liefert.

Aufgabe der Erfindung ist es, einen Winkelspiegel für gepanzerte Fahrzeuge zur Verfügung zu stellen, der mit einem elektronischen Bildschirm zur gleichzeitigen Durchsicht und Einspielung von Text oder Bildinformationen ausgestattet ist, der trotzdem sehr platzsparend ausführbar ist. Gleichzeitig soll die Handhabung des Winkelspiegels mit seinem elektronischen Bildschirm funktionssicherer und weiter vereinfacht gestaltet sein.

Die Lösung dieser Aufgabe ergibt sich in Verbindung mit den Merkmalen des Oberbegriffes erfindungsgemäß aus den technischen Merkmalen des kennzeichnenden Teils des ersten Patentanspruches, insbesondere dadurch, dass das Bauelement vor dem Einblick des Winkelspiegels angeordnet ist, wozu es im strom- und spannungsfreien Zustand durchsichtig ausgeführt ist, sodass die Durchsicht durch den Winkelspiegel jederzeit möglich bleibt.

Ein solches folienartiges Bauelement erlaubt eine Anwendung in einem herkömmlichen Winkelspiegel, ohne dessen Gehäuseabmessungen wesentlich oder gar nicht daran anpassen zu müssen, ebenso wie die dazugehörige Elektronik vom Winkelspiegel in einem separaten Gehäuse und dieses auch getrennt an weniger exponierter und sicherer Stelle im Fahrzeug untergebracht werden kann, was der Funktionssicherheit des Winkelspiegels zu Gute kommt.

Weiterhin ist bei einem solchen erfinderischen Winkelspiegel von Vorteil, dass er einfach gegen herkömmliche Winkelspiegel, die bisher ohne Einspielung von Text und/ oder Bildinformationen auskommen mussten, ausgetauscht werden kann, da seine Baugröße nicht oder nur geringfügig von denen der bekannten Winkelspiegel abweicht.

Weitere vorteilhafte Ausführungsformen des Gegenstandes der Erfindung ergeben sich mit und in Kombination aus den nachfolgenden Unteransprüchen.

Bei einer ganz besonders vorteilhaften Ausführungsform der Erfindung ist das Bauelement als berührungsempfindlicher Bildschirm ausgebildet, was wesentliche Vorteile bei der Bedienung des Winkelspiegels mit sich bringt, da zusätzliche Schalterbauelemente, Bedienfelder und mechanische Hebel vollständig weggelassen werden können, sodass der Bildschirm oder sogar der gesamte Winkelspiegel über entsprechende Flächen bedienbar ist, etwa eine integrierte Kamera in ihrer Blickrichtung, Blende oder ihrem Zoombereich verstellt werden kann, wodurch sich die Geländeinformationen um ein Fahrzeug herum deutlich einfacher und besser erfassen lassen.

Bei einer vorteilhaften Variante des Gegenstandes der Erfindung ist ein zweites Bauelement auf der dem Einblick entgegengesetzten Seite des Prismenblockes angeordnet, sodass bei außer Betrieb befindlichem Bildschirm der Winkelspiegel in seiner herkömmlichen Funktion nicht beschränkt ist.

Anordnungen von solchen Bauelementen vor sowie gleichzeitig hinter dem Prismenblock schaffen zudem eine nochmals gesteigerte Informationsmöglichkeit, wie etwa räumliche Darstellungen.

Bevorzugterweise ist das erfinderische Bauelement luftspaltfrei auf dem Prismenblock angeordnet, sodass keine gegebenenfalls im Winkelspiegel enthaltende Luftfeuchte den Durchblick durch ein Beschlagen verschlechtern kann.

Die Anordnung des Bauelementes kann hierbei vorteilhafterweise mittels eines Klebers oder einer Klebefolie erfolgen, sei es vor und/ oder hinter dem Prismenblock.

Für eine betriebssichere Funktion des erfinderischen Winkelspiegels kann zwischen Prismenblock und Bauelement eine durchsichtige Heizfolie und/ oder auch ein Strahlenschutzglas vorgesehen sein, wodurch die Funktionssicherheit des Winkelspiegels weiter gesteigert wird.

Einen weiteren Vorteil des erfinderischen Winkelspiegels liefert die vielfältige Ausführungsfreiheit bei der Konstruktion, da das Bauelement auch nur vor Teilbereichen des Einblickes angeordnet werden kann, etwa nur am Rand oder nur oben oder nur seitlich, falls andere Teilbereiche des Winkelspiegels frei bleiben müssen oder anderweitig genutzt werden sollen.

Entsprechend einer besonders vorteilhaften Ausführungsform des erfinderischen Winkelspiegels besteht das Bauelement aus einer OLED-Folie (Organic Light Emitting Diode) oder eine Elektrolumineszenzschicht, wobei solche Bauelemente Text, Grafik und Bilder fotorealistisch wiedergeben können. Des Weiteren sind solche OLED-Folien sehr robust und funktionieren sicher in einem großen Temperatur- und Luftfeuchtebereich, sodass die Funktion des elektronischen Bildschirms auch bei hartem Geländeeinsatz sichergestellt bleibt.

Nachfolgend ist ein Ausführungsbeispiel des erfinderischen Winkelspiegels anhand von Zeichnungen näher beschrieben. Es zeigen:
- Fig. 1: einen Winkelspiegel von der Einblickseite her,
- Fig. 2: einen Winkelspiegel gemäß Fig. 1 in Seitenansicht von links, und
- Fig. 3: eine geschnittene Seitenansicht des Winkelspiegels gemäß Fig. 2 in vergrößerter Darstellung.

Der Winkelspiegel 1 besteht aus einem Gehäuse 2, welches einen ein- oder mehrteiligen Prismenblock 3 umgibt und im Fahrzeuginneren einen Einblick 4 und außerhalb des Fahrzeuges einen Ausblick 5 durch den Prismenblock 3 aufweist.

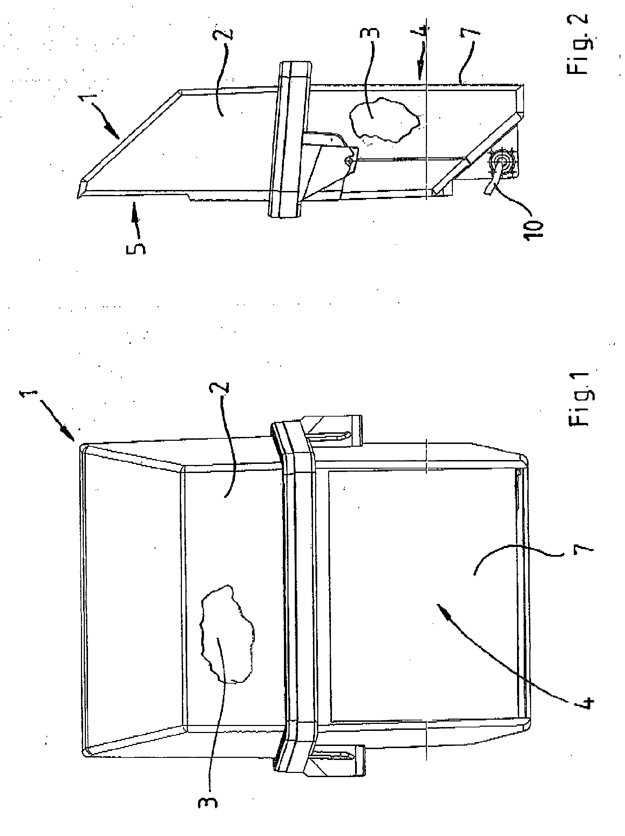

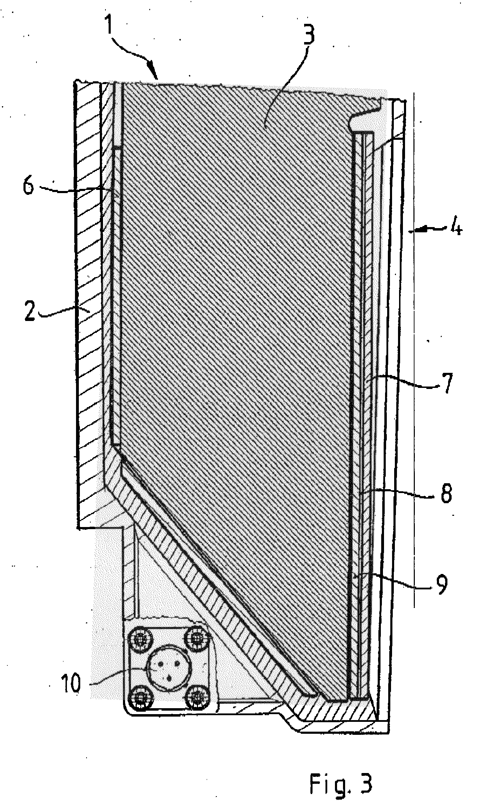

Die Darstellungen in den Fig. 1 und 2 unterscheiden sich prinzipiell nicht von Darstellung herkömmlicher Winkelspiegel, da die Gehäuse 2 im wesentlichen baugleich ausfallen können, weil die dünnen flachen und/ oder folienartigen Bauelemente 6;7 ohne wesentliche oder ganz ohne Änderungen im Gehäuse 2 verbaut werden können, insbesondere wenn sie unmittelbar auf dem Prismenblock 3 aufgeklebt sind, wie dies in Fig. 3 dargestellt ist.

Diese zeigt insbesondere den unteren Bereich eines Prismenblockes 3 mit einem hinter dem Einblick 4 angeordneten Bauelement 6 sowie einem vor dem Einblick 4 angeordneten Bauelement 7, welches hier zusätzlich mit einer Heizfolie 8 und ein Strahlenschutzglas 9 verbunden ist, wobei die dargestellten Schichtdicken nicht maßstabsgetreu gezeigt sind.

Über eine Energie- und Datenzuleitung 10 wird der Winkelspiegel 1 mit Strom versorgt und die Bauelemente mit den darzustellenden Informationen.

## Patentansprüche

1. Winkelspiegel (1) für gepanzerte Fahrzeuge, aus einem Gehäuse (2) mit einem darin eingesetzten ein- oder mehrteiligen Prismenblock (3), einem Einblick (4) und einem Ausblick (5), einem elektronischen Bildschirm zur zeitgleichen Durchsicht oder Einspielung von Text und/ oder Bildinformationen, wobei der Bildschirm aus einem dünnen flachen oder folienartigen Bauelement (7) besteht, **dadurch gekennzeichnet, dass** das Bauelement (7) im strom- und spannungsfreien Zustand durchsichtig und vor dem Einblick (4) des Winkelspiegels (1) angeordnet ist.

2. Winkelspiegel nach Anspruch 1, **dadurch gekennzeichnet, dass** das Bauelement (7) als berührungsempfindlicher Bildschirm ausgebildet ist.

3. Winkelspiegel nach Anspruch 2, **dadurch gekennzeichnet, dass** er frei von mechanischen Bedienelementen und vollständig über den berührungsempfindlichen Bildschirm bedienbar ist.

4. Winkelspiegel nach einem der vorgenannten Ansprüchen, **dadurch gekennzeichnet, dass** ein zweites Bauelement (6) auf der dem Einblick (4) entgegengesetzten Seite des Prismenblockes (3) angeordnet ist.

5. Winkelspiegel nach einem der vorgenannten Ansprüche, **dadurch gekennzeichnet, dass** das Bauelement (6;7) luftspaltfrei auf dem Prismenblock (3) angeordnet ist.

6. Winkelspiegel nach einem der vorgenannten Ansprüche, **dadurch gekennzeichnet, dass** das Bauelement (6;7) mittels eines Klebers oder einer Klebefolie auf dem Prismenblock (3) festgelegt ist.

7. Winkelspiegel nach einem der vorgenannten Ansprüche, **dadurch gekennzeichnet, dass** zwischen Prismenblock (3) und Bauelement (6;7) eine durchsichtige Heizfolie (8) und/ oder ein Strahlenschutzglas (9) vorgesehen ist.

8. Winkelspiegel nach einem der vorgenannten Ansprüche, **dadurch gekennzeichnet, dass** das Bauelement (6;7) nur vor oder hinter Teilbereichen des Einblicks (4) angeordnet ist.

9. Winkelspiegel nach einem der vorgenannten Ansprüche, **dadurch gekennzeichnet, dass** das Bauelement (6;7) aus einer OLED-Folie (Organic Light Emitting Diode) oder einer Elektrolumineszenzschicht besteht.

## Claims

1. Periscope (1) for armoured vehicles, comprising a housing (2) with a one-part or multi-part prism block (3) fitted therein, an inwardly viewing window (4) and an outwardly viewing window (5), an electronic screen for simultaneously looking through or feeding in textual and/or graphical information, the screen consisting of a thin flat or film-like component (7) **characterized in that** the component (7) is transparent in the current-free and voltage-free state and is arranged in front of the inwardly viewing window (4) of the periscope (1).

2. Periscope according to Claim 1, **characterized in that** the component (7) is formed as a touch-sensitive screen.

3. Periscope according to Claim 2, **characterized in that** it is free from mechanical operating elements and can be operated completely by way of the touch-sensitive screen.

4. Periscope according to one of the preceding claims, **characterized in that** a second component (6) is arranged on the side of the prism block (3) that is remote from the inwardly viewing window (4).

5. Periscope according to one of the preceding claims, **characterized in that** the component (6; 7) is arranged on the prism block (3) without any air gap in between.

6. Periscope according to one of the preceding claims, **characterized in that** the component (6; 7) is fixed on the prism block (3) by means of an adhesive or an adhesive film.

7. Periscope according to one of the preceding claims, **characterized in that** a transparent heating foil (8) and/or a radiation shielding glass (9) is provided between the prism block (3) and the component (6; 7).

8. Periscope according to one of the preceding claims, **characterized in that** the component (6; 7) is arranged only in front of or behind partial regions of the inwardly viewing window (4).

9. Periscope according to one of the preceding claims, **characterized in that** the component (6; 7) consists of an OLED film (Organic Light Emitting Diode) or an electroluminescent layer.

## Revendications

1. Périscope (1) destiné à un véhicule blindé, constitué d'un boîtier (2) dans lequel est inséré un bloc de prisme en une seule pièce ou en plusieurs pièces (3), une entrée (4) et une sortie (5), un écran électronique destiné à l'affichage en transparence ou à l'entrée simultanée de texte et/ou d'informations d'images, dans lequel l'écran est constitué d'une surface mince ou d'un composant de type film (7), **caractérisé en ce que** le composant (7) est transparent à l'état d'absence de courant et de tension et est disposé à l'avant de l'entrée (4) du périscope (1).

2. Périscope selon la revendication 1, **caractérisé en ce que** le composant (7) est réalisé sous la forme d'un écran tactile.

3. Périscope selon la revendication 2, **caractérisé en ce qu'**il est dépourvu d'éléments de commande mécaniques et peut être entièrement commandé par l'intermédiaire de l'écran tactile.

4. Périscope selon l'une quelconque des revendications précédentes, **caractérisé en ce qu'**un second composant (6) est disposé sur la face du bloc de prisme (3) qui est opposée à l'entrée (4).

5. Périscope selon l'une quelconque des revendications précédentes, **caractérisé en ce que** le composant (6 ; 7) est disposé sans interstice d'air sur le bloc de prisme (3).

6. Périscope selon l'une quelconque des revendications précédentes, **caractérisé en ce que** le composant (6 ; 7) est fixé au moyen d'un adhésif ou d'un film adhésif au bloc de prisme (3).

7. Périscope selon l'une quelconque des revendications précédentes, **caractérisé en ce qu'**un film chauffant transparent (8) et/ou un verre de protection contre les rayonnements (9) est prévu entre le bloc de prisme (3) et le composant (6 ; 7).

8. Périscope selon l'une quelconque des revendications précédentes, **caractérisé en ce que** le composant (6 ; 7) est uniquement disposé à l'avant ou à l'arrière de régions partielles de l'entrée (4).

9. Périscope selon l'une quelconque des revendications précédentes, **caractérisé en ce que** le composant (6 ; 7) est constitué d'un film OLED (diode électroluminescente organique) ou d'une couche électroluminescente.
